# EUROPÄISCHE PATENTSCHRIFT

(11) **EP 1 762 362 B1**
(45) Veröffentlichungstag und Bekanntmachung des Hinweises auf die Patenterteilung: **09.11.2011**
(21) Anmeldenummer: 06018960.2
(22) Anmeldetag: 11.09.2006
(51) Int. Cl.: B29C 47/08

(54) **Extrudergestell**
Extruder rack
Support d'extruder

(30) Priorität: 12.09.2005 DE 102005043868
(43) Veröffentlichungstag der Anmeldung: 14.03.2007
(73) Patentinhaber: Zeppelin Reimelt GmbH, 63322 Rödermark (DE)
(72) Erfinder: Rockstedt, Siegward, 1858 Luxembourg (LU)
(74) Vertreter: Dantz, Jan Henning

(56) Entgegenhaltungen:
- EP-A- 0 095 010
- EP-A- 1 627 723
- DATABASE WPI Week 199502 Thomson Scientific, London, GB; AN 1995-011353 XP002506479 -& JP 06 297541 A (IKG KK) 25. Oktober 1994 (1994-10-25)
- DATABASE WPI Week 199502 Thomson Scientific, London, GB; AN 1995-011352 XP002506480 -& JP 06 297540 A (IKG KK) 25. Oktober 1994 (1994-10-25)
- DATABASE WPI Week 199550 Thomson Scientific, London, GB; AN 1995-389458 XP002506481 & JP 07 266405 A (KOBE STEEL LTD) 17. Oktober 1995 (1995-10-17)

## Beschreibung

Die Erfindung betrifft ein Extrudergestell für einen Extruder mit einer Mehrzahl von in Richtung einer Längsachse hintereinander angeordneten Funktionskomponenten.

Unter dem Sammelbegriff "Extruder" werden im Rahmen der vorliegenden Anmeldung insbesondere Vorrichtungen wie Misch- oder Knetmaschinen, Ein- oder Doppelschneckenpressen, Compounder od. dgl. zusammengefaßt. Alle diese Vorrichtungen dienen insbesondere in der Kunststoffindustrie dem Zweck, einen als Pulver, Granulat, Flüssigkeit od. dgl. zugeführten Rohstoff, z. B. ein Thermoplast, zu fördern, zu verdichten, zu schmelzen bzw. zu plastifizieren, zu mischen und/oder zu kneten, bevor der fertig bearbeitete Rohstoff dann als mehr oder weniger pastöse oder flüssige Masse durch eine Austragsöffnung des Extruders ausgetragen wird. Dabei kann das fertige Material z. B. abgekühlt und granuliert werden.

Aufgrund ihrer konstruktiven Gegebenheiten können Extruder für ganz unterschiedliche Bearbeitungsvorgänge eingesetzt werden. Während in manchen Fällen Produkte mit ausreichend guter Qualität nur mit langen Verweilzeiten der Rohstoffe im Extruder, zahlreichen unterschiedlichen Bearbeitungsstufen und entsprechend vielen Funktionskomponenten erzeugbar sind, kann es in anderen Fällen notwendig sein, nur vergleichsweise wenige Funktionskomponenten und entsprechend kurze Extruder vorzusehen, beispielsweise um eine Überhitzung der zugegebenen Rohstoffe zu vermeiden.

Es ist daher bereits vorgeschlagen worden, statt kompletter Extruder nur einzelne Gehäuseabschnitte für ausgewählte Funktionen herzustellen und die Extruder in Abhängigkeit von ihrer im Einzelfall gewünschten Funktion baukastenartig aus den derart vorgefertigten Gehäuseabschnitten zusammenzusetzen (z. B. EP 1 627 723 A2). Durch Kombination unterschiedlicher Gehäuseabschnitte lassen sich auf diese Weise Extruder designen, die speziell an die Bearbeitung eines ausgewählten Polymers (z. B. PP, PVC, TPO, TPR) angepasst sind.

Je nach Anwendungszweck ist es bei Extrudern außerdem häufig erwünscht, den Rohstoffen ausgewählte Füllstoffe zuzuführen. Zu diesem Zweck sind sogenannte Seiteneinspeiser oder Seitenzuführungen bekannt, die mit Zuführungsöffnungen verbunden werden können, die seitlich an den Gehäuseabschnitten des Extruders angebracht sind. In Abhängigkeit vom Einzelfall können diese Seiteneinspeiser auch an unterschiedliche Gehäuseabschnitte angeschlossen und demgemäß - in Längsrichtung des Extruders betrachtet - an unterschiedlichen Orten angeordnet werden.

Dem durch die beschriebene Bauweise erzielten Vorteil einer hohen Flexibilität bei der Gestaltung eines Extruders steht allerdings ein bisher nicht überwundener Nachteil gegenüber. Dieser besteht darin, dass Extruder der beschriebenen Art zusammen mit einer zugehörigen, meistens aus einem Antriebsmotor und einem Getriebe bestehenden Antriebseinheit durchweg auf Gestellen montiert werden, die z. B. aus Schweißkonstruktionen bestehen und als Sonderanfertigungen hergestellt werden (z. B. EP 0 095 010 A1). Zu jedem Extruder, der nach einer vorgegebenen Verfahrenstechnik arbeitet, wird bisher ein speziell für diesen Zweck entworfenes Gestell vorgesehen. Das ist einerseits kostenaufwendig und erschwert andererseits die Umrüstung einer Extruderanlage für einen anderen Zweck durch Demontage vorhandener oder Hinzufügung neuer Gehäuseabschnitte. Auch das Auswechseln von Gehäuseabschnitten mit größerer oder kleinerer Länge und/oder das Verbinden der benötigten Seiteneinspeiser mit anderen Gehäuseabschnitten ist nur durch komplizierte und aufwendige Umrüstarbeiten möglich. Daher ist es üblich, trotz der grundsätzlich bestehenden Flexibilität für jeden gewünschten Zweck einen zugehörigen Extruder einschließlich Gestell vorzusehen, was zu unerwünschten Investitions- und Lagerkosten führt.

Schließlich ist es bekannt (JP-A-06-297541 und JP-A-06-297540), jeden Gehäuseabschnitt bzw. Zylinder des Extruders mittels einer fest mit ihm verbundenen Stütze auf einem Wagen abzustützen, der mittels Rollen auf einer parallel zur einer Längsrichtung angeordneten Laufschiene fahrbar montiert ist. Zur Verbindung von zwei aneinander grenzenden Gehäuseabschitten dienen schwenkbare Klammern, die mittels weiterer Stützen ebenfalls auf je einem der Wagen abgestützt sind. Daher muß für jeden einzelnen Gehäuseabschnitt ein separater Wagen mit einer Stütze für den Gehäuseabschnitt und einer weiteren Stütze für die Klammer vorgesehen werden.

Ausgehend davon liegt der Erfindung das technische Problem zugrunde, ein Extrudergestell der eingangs bezeichneten Gattung zu schaffen, das an unterschiedliche Extrudertypen und Extruderlängen angepasst werden kann, ohne dass umständliche Umrüstarbeiten erforderlich sind oder neue Gestelle konstruiert werden müssen.

Zur Lösung dieser Aufgabe dienen die Ansprüche 1 und 21.

Durch die Erfindung wird ein Extrudergestell vorgeschlagen, bei dem die den Extruder und vorzugsweise auch die Antriebseinheit tragenden Bauteile aus Querelementen bestehen, die längs des wenigstens einen Längselements je nach Bedarf verschoben und dadurch an die im Einzelfall gewünschte Länge des Extruders angepasst werden können. Das kann ohne Austausch des Längselements erfolgen, wenn dieses entsprechend der größten im Einzelfall zu erwartenden Extruderlänge bemessen wird. In diesem Fall lässt sich das erfindungsgemäße Extrudergestell unabhängig von dem im Einzelfall gewählten, durch Kombination der Gehäuseabschnitte erhaltenen Extrudertyp ohne den Austausch von Gestellteilen und mit einfachen Handgriffen umrüsten.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 eine Seitenansicht eines erfindungsgemäßen Gestells für einen Extruder;
Fig. 2 eine vergrößerte Vorderansicht eines ersten Querelements des Gestells nach Fig. 1;
Fig. 3 eine der Fig. 2 entsprechende Ansicht des ersten Querelements in einem verkleinerten Maßstab sowie zugehörige Längselemente und Verbindungsmittel des Gestells nach Fig. 1 in einer auseinandergezogenen Darstellung;
Fig. 4 eine der Fig. 3 entsprechende Ansicht, jedoch im zusammengebauten Zustand des Gestells;
Fig. 5 und 6 den Fig. 3 und 4 entsprechende Ansichten eines zweiten Querelements des Gestells nach Fig. 1;
Fig. 7 eine der Fig. 2 entsprechende Ansicht einer Stützplatte, die zur Montage einer Vorrichtung zur Seiteneinspeisung dient;
Fig. 8 eine schematische und perspektivische Darstellung eines auf einem erfindungsgemäßen Gestell montierten Extruders;
Fig. 9 eine Seitenansicht des Extruders nach Fig. 8, jedoch nach Demontage einer Seitenabdeckung;
Fig. 10 bis 12 vergrößerte und teilweise geschnittene Einzelheiten A, B und C der Fig. 9;
Fig. 13 in einer Seitenansicht schematisch ein Förderschneckengetriebe der in Fig. 8 und 9 dargestellten Vorrichtung zur Seiteneinspeisung nach Demontage eines Deckels eines Getriebegehäuses; und
Fig. 14 schematisch einen Vertikalschnitt durch die Vorrichtung längs einer Linie XIV - XIV der Fig. 13.

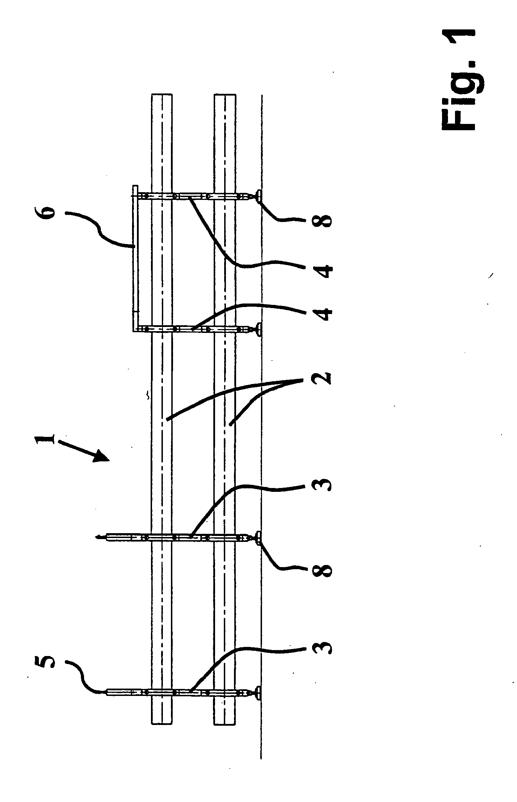

Fig. 1 zeigt ein erfindungsgemäßes Extrudergestell 1 mit zwei übereinander und parallel zueinander angeordneten, vorzugsweise rohr- oder stangenförmigen, geraden Längselementen 2, die durchgehend denselben Querschnitt besitzen. Quer zu den Längsachsen der Längselemente 2 sind an einer Gestellseite (in Fig. 1 links) zwei nebeneinander und mit Abstand angeordnete, erste Querelemente 3 und an einer anderen Gestellseite (in Fig. 1 rechts) zwei nebeneinander und mit Abstand angeordnete, zweite Querelemente 4 vorhanden. Die ersten Querelemente 3 weisen an ihren Oberseiten Halterungen 5 auf, während die beiden zweiten Querelemente 4 an ihren Oberseiten z. B. durch eine Montageplatte 6 miteinander verbunden sind. An ihren Unterseiten sind die ersten und zweiten Querelemente 3, 4 mit Stellfüßen 8 versehen, auf denen das gesamte Gestell 1 abgestützt ist.

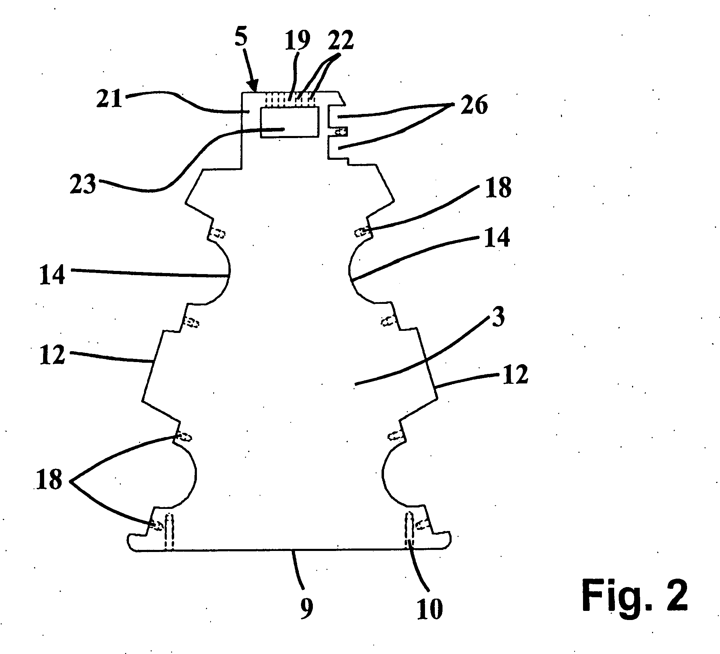

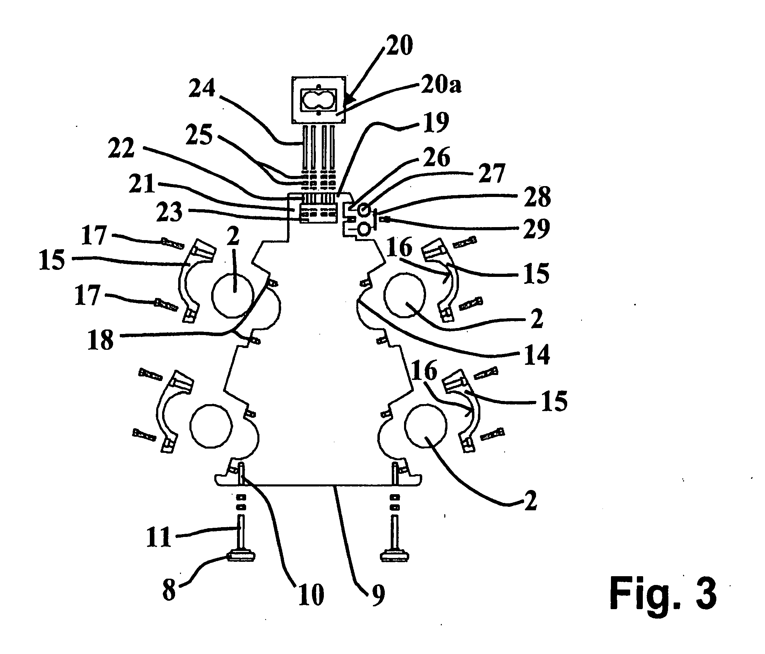

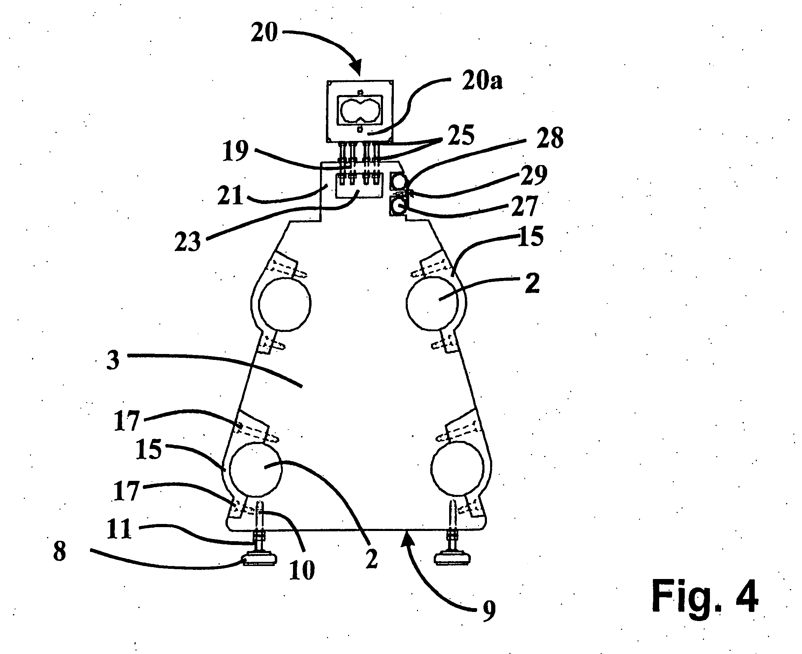

Fig. 2 bis 4 zeigen ein Ausführungsbeispiel eines ersten Querelements 3. Das Querelement 3 ist als eine planparallele, massive Platte ausgebildet, deren Breitseiten senkrecht zu den Achsen der Längselemente 2 zu liegen kommen. An einem Boden 9 weist das Querelement 3 Gewindebohrungen 10 auf, in die gemäß Fig. 3 und 4 von den Stellfüßen 8 aufragende Gewindestifte 11 eingedreht werden können. An ihren im montierten Zustand im wesentlichen vertikal verlaufenden Seitenkanten 12 (Fig. 2) ist das Querelement 3 mit je zwei Aussparungen 14 versehen. Diese dienen, wie Fig. 4 zeigt, im montierten Zustand des Gestells 1 zum zumindest teilweisen Umgreifen je eines in sie eingelegten Längselements 2. Im Ausführungsbeispiel ist davon ausgegangen, dass die Längselemente 2 aus zylindrischen Rohren oder Stangen mit kreisrunden Querschnitten und die Aussparungen 14 aus randoffenen, an die Querschnittsform der Längselemente 2 angepassten, hier halbkreisförmigen Ausschnitten bestehen. Die Längselemente 2 können daher entsprechend Fig. 4 etwa mit der Hälfte ihres Umfangs radial in je eine zugeordnete Aussparung 14 eingelegt werden.

Zur Verbindung der Längselemente 2 mit den Querelementen 3 dienen erfindungsgemäß leicht fügbare Verbindungsmittel. Im Ausführungsbeispiel bestehen diese aus Klammern bzw. Klemmen 15, die entsprechend der äußeren Querschnittsform der Längselemente 2 ausgebildete Klemmflächen oder Klemmbacken 16 aufweisen, die hier wie die Aussparungen 14 einen halbkreisförmigen Querschnitt besitzen. Die Klemmen 15 werden, wie insbesondere Fig. 4 zeigt, bei in die Aussparungen 14 eingelegten Längselementen 2 von außen her um deren frei bleibende Umfangsabschnitte gelegt und mit den Querelementen 3 verbunden. Dies erfolgt zweckmäßig mit Hilfe von Befestigungsschrauben 17, die durch Schraublöcher in den Klemmen 15 hindurch in Gewindebohrungen 18 eingedreht werden, die in den seitlichen Längskanten der Querelemente 3 ausgebildet sind, wie in Fig. 3 und 4 für je vier Klemmen 15 angedeutet ist. Dadurch bilden die Aussparungen 14 und Klemmen 15 nach der Montage des Gestells 1 schellenartige Verbindungsmittel, die die Längselemente 2 auf dem ganzen Umfang umschließen. Zweckmäßig ist die Anordnung so getroffen, dass die Querelemente 3 nach dem Festziehen der Befestigungsschrauben 17 in Richtung der Achsen der Längselemente 2 unverschiebbar auf diesen gelagert sind.

Die im oberen Bereich jedes ersten Querelements 3 vorgesehene Halterung 5 enthält vorzugsweise einen Tragsteg 19, der im eingebauten Zustand des Querelements 3 horizontal angeordnet ist, zur Aufnahme eines schematisch in Fig. 3 und 4 angedeuteten Extruders 20 dient, an seinen Enden durch Stützen 21 mit dem übrigen Teil des Querelements 3 verbunden ist und in einem mittleren Teil durchgehende Bohrungen 22 aufweist. Der Tragsteg 19 wird vorzugsweise dadurch hergestellt, dass aus dem Querelement 3 ein rechteckiger Abschnitt ausgeschnitten wird, so dass eine Ausnehmung 23 entsteht. Diese Ausnehmung 23 bildet unterhalb des Tragstegs 19 einen Freiraum, durch den hindurch die Bohrungen 22 durchragende Befestigungselemente 24 (Fig. 3 und 4) in Form von Schrauben, Gewindebolzen od. dgl. in Gewindebohrungen eingedreht werden, die im Boden eines Extrudergehäuses 20a ausgebildet sind. Die Höhenlage des Extruders 20 oberhalb des Tragstegs 19 lässt sich dabei mit Hilfe von auf die Befestigungselemente 24 geschraubten Muttern 25 einstellen.

Die ersten Querelemente 3 sind schließlich mit randoffenen Aussparungen 26 (Fig. 2) versehen, die z. B. in die seitlichen Ränder der Stützen 21 eingearbeitet sind. Diese Aussparungen 26 dienen dem Zweck, bei Extruderanlagen erforderliche Installationsleitungen 27 (Fig. 3 und 4) aufzunehmen, die z. B. aus elektrischen Kabeln, Vor- und Rücklaufleitungen von Kühleinrichtungen, hydraulischen oder pneumatischen Druckleitungen od. dgl. bestehen können sowie entsprechend Fig. 3 und 4 lose in die Aussparungen 26 eingelegt und in diesen dann mit Verschlusselementen 28 gesichert werden, die die Aussparungen 26 überdecken und mittels je einer Befestigungsschraube 29 an der betreffenden Stütze 21 befestigt werden.

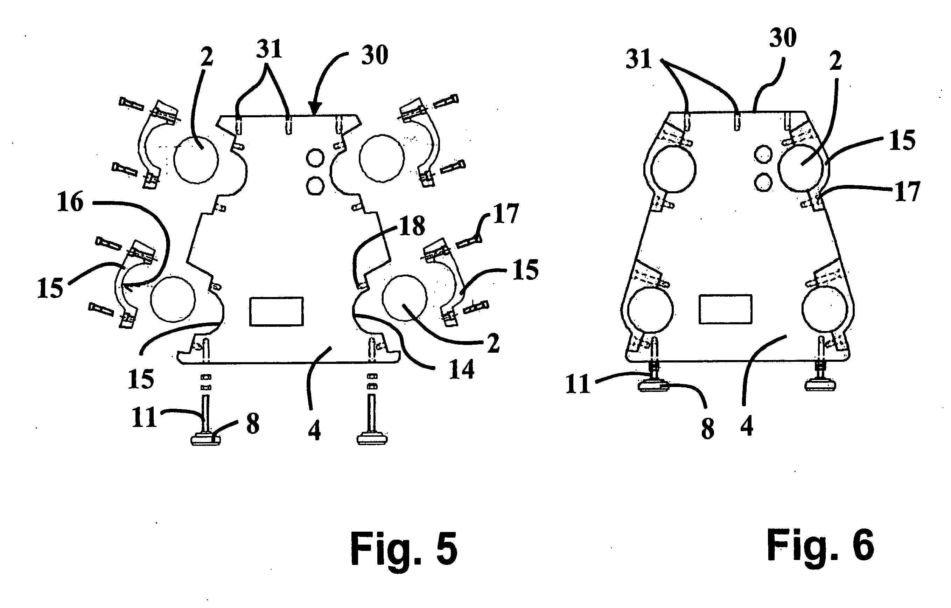

Die zweiten Querelemente 4 sind nach Fig. 5 und 6 in ihren unteren Bereichen genau so wie die ersten Querelemente 3 ausgebildet, weshalb insoweit für gleiche Teile dieselben Bezugszeichen verwendet sind. Sie unterscheiden sich von den ersten Querelementen 3 jedoch dadurch, dass sie die Tragstege 19, Ausnehmungen 23, Aussparungen 26 und die diesen zugeordneten Bauelemente nicht aufweisen. Stattdessen weisen die zweiten Querelemente 4 im oberen Bereich lediglich je eine im eingebauten Zustand zweckmäßig horizontal angeordnete Stützfläche 30 auf, in die senkrecht zu ihr angeordnete Gewindebohrungen 31 eingearbeitet sind. Diese dienen zur Befestigung der Montageplatte 6 (Fig. 1) mit Hilfe von nicht dargestellten, in die Bohrungen 31 eingedrehten Befestigungselementen wie z. B. Schrauben. Wie der Extruder 20 kann vorzugsweise auch die Höhenlage der Montageplatte 6 oberhalb der Stützfläche 30 einstellbar sein, indem als Befestigungselemente Gewindebolzen od. dgl. und auf diese aufgeschraubte Muttern verwendet werden.

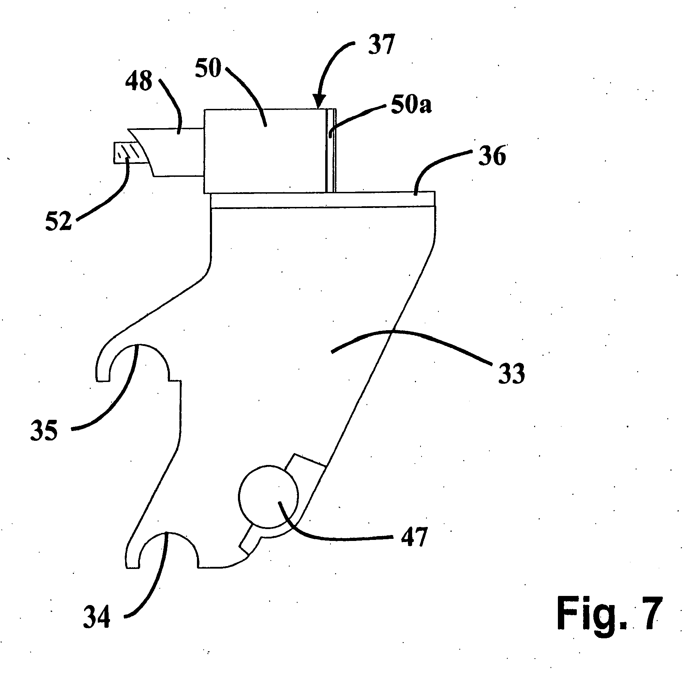

Nach einem weiteren bevorzugten Merkmal der Erfindung sind dem Gestell 1 wenigstens zwei massive Stützplatten 33 (Fig. 7) zugeordnet. Diese weisen im Bodenbereich eine randoffene Aussparung 34 und in einem seitlichen Bereich eine weitere, randoffene Aussparung 35 auf. Beide Aussparungen 34, 35 sind zur Unterseite der Stützplatten 33 hin offen und vorzugsweise mit einer entsprechend der Querschnittsform der Längselemente 2 entsprechenden Innenkontur versehen. An ihrer Oberseite sind die Stützplatten 33 mit Mitteln 36 zur Halterung einer Vorrichtung 37 zur Seiteneinspeisung versehen, wie weiter unten näher erläutert wird.

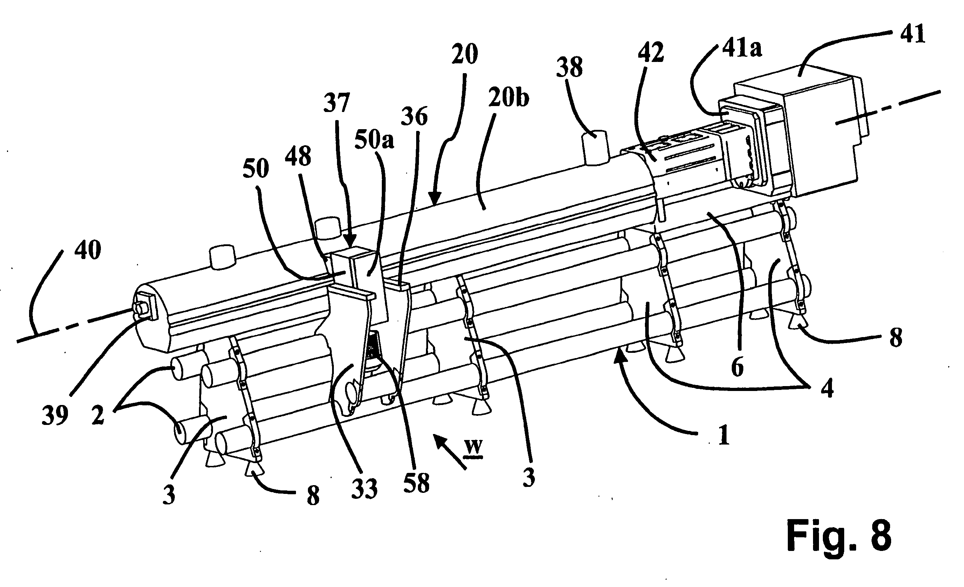

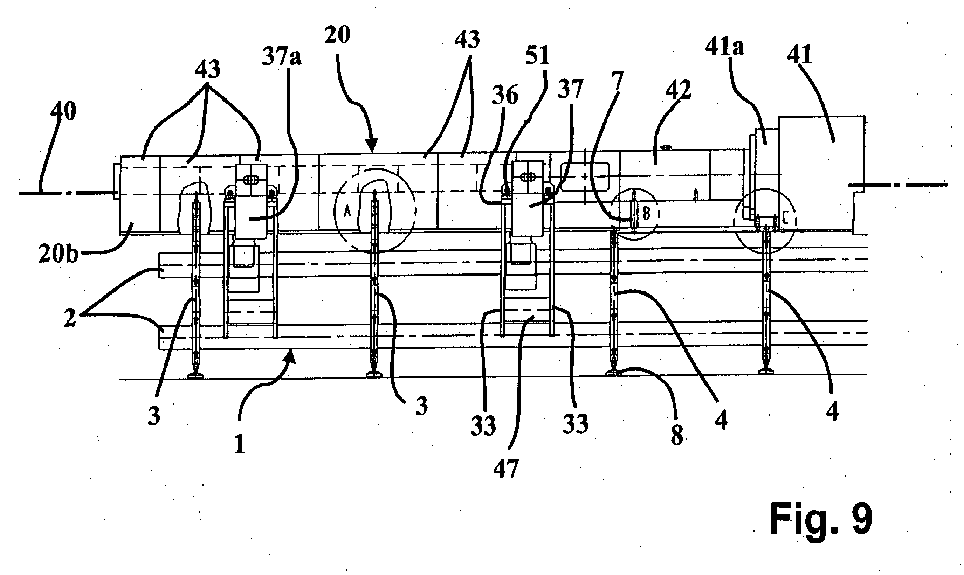

Fig. 8 und 9 zeigen das aus den Längselementen 2 sowie den ersten und zweiten Querelementen 3, 4 zusammengesetzte, erfindungsgemäße Extrudergestell 1 in je einer perspektivischen Darstellung und einer Seitenansicht. Danach sind im Ausführungsbeispiel vier parallele Längselemente 2 mit vorzugsweise gleichen Abmessungen und je zwei erste und zweite Querelemente 3 und 4 vorhanden. Der Zusammenbau des Gestells 1 erfolgt einfach dadurch, dass die Längselemente 2 entsprechend Fig. 3 bis 5 in die Aussparungen 14 der ersten und zweiten Querelemente 3, 4 eingelegt und dann mit Hilfe der Klemmen 15 mit diesen verbunden werden.

Im fertigen Zustand ruht das Gestell 1 auf den Stellfüßen 8, wobei die Längselemente 2 horizontal und die Querelemente 3, 4 vertikal angeordnet bzw. ausgerichtet sind. Zu diesem Zweck sind die beiden Seitenränder 12 der ersten Querelemente 3 mit je zwei übereinander angeordneten Aussparungen 14 und die zweiten Querelemente 4 an beiden Seitenrändern entsprechend mit je zwei in denselben Höhen angeordneten Aussparungen 14 versehen, so dass im zusammengebauten Zustand alle vier Längselemente 2 parallel zueinander und automatisch auch horizontal angeordnet sind.

Der Extruder 20 ist in an sich bekannter Weise mit je einer Einfüllöffnung 38 und einer Austrittsöffnung 39 für einen zu bearbeitenden Rohstoff, z. B. ein geeignetes Polymer, versehen. Im Inneren des Extruders 20 ist z. B. eine in Fig. 8 und 9 nicht dargestellte Doppelschnecke angeordnet, mittels derer der durch die Einfüllöffnung 38 zugeführte Rohstoff z. B. verdichtet, plastifiziert, geknetet und/oder gemischt und dabei in Richtung eines Pfeils v parallel zu einer Längsachse 40 zur Austrittsöffnung 39 befördert wird. An dieser kann der bearbeitete und erhitzte Rohstoff je nach Art des Extruders 20 z. B. abgekühlt und granuliert werden.

Zum Antrieb der Doppelschnecke dienen in bekannter Weise z. B. ein Antriebsmotor 41 und ein zwischen diesen und die Doppelschnecke geschaltetes Getriebe 42, die beide auf der zur Austrittsöffnung 39 entgegengesetzten Seite des Extruders 20 angeordnet sind. Außerdem zeigt Fig. 9, in der eine seitliche Abdeckung 20b des Extruders 20 weggelassen wurde, dass der Extruder 20 in Richtung seiner Längsachse 40 aus einer Mehrzahl von Extrudergehäuseabschnitten 43 zusammengesetzt ist, die in Abhängigkeit von der im Einzelfall gewünschten Behandlung und Bearbeitung des Rohstoffs ausgewählt worden sind. Die einzelnen Gehäuseabschnitte 43 sind durch nicht dargestellte Befestigungselemente axial fest miteinander verbunden, so dass der gesamte Extruder 20 eine kompakte, als Ganzes handhabbare Baueinheit bildet.

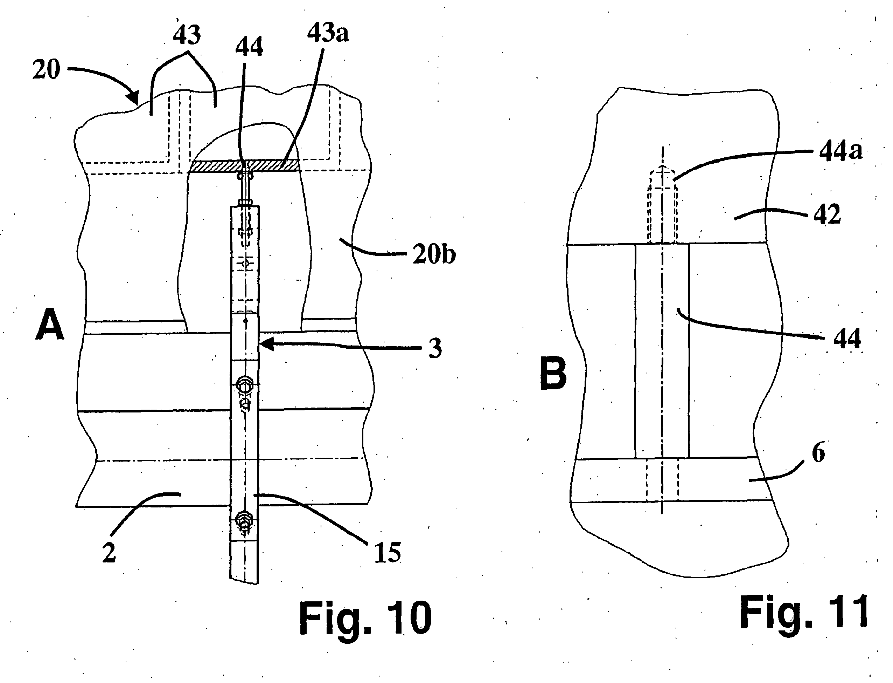

Vor dem Festziehen der Klemmen 15 mit den Befestigungselementen 17 können die Querelemente 3, 4 auf den Längselementen 2 beliebig parallel zur Längsachse 40 verschoben werden, bis sie zur Befestigung des jeweiligen Extruders 20 erwünschte Positionen einnehmen- Diese sind gemäß Fig. 9 und 10 für die Querelemente 3 dadurch vorgegeben, dass Böden 43a ausgewählter Gehäuseabschnitte 43 bzw. des Extrudergehäuses 20a dort mit Gewindebohrungen 44 (Fig. 10) versehen sind, in welche die in Fig. 3 gezeigten Befestigungselemente 24 eingedreht werden können. Bei Bedarf ist es natürlich auch möglich, die vergleichsweise dicken Böden 43a dort, wo es erforderlich oder erwünscht ist, mit zusätzlichen Gewindebohrungen zu versehen.

Wie insbesondere Fig. 1, 5 und 6 zeigen, wird die Montageplatte 6 mit Hilfe von in die Gewindebohrungen 31 eingedrehten Befestigungselementen, z. B. Schrauben, auf den Stützflächen 30 der zweiten Querelemente 4 befestigt. In die Montageplatte 6 eingebrachte Bohrungen und diese durchragende Befestigungsschrauben 44 (Fig. 1 und 11) können dann zur Montage des Getriebes 42 dienen, indem die Befestigungsschrauben 44 in Gewindebohrungen 44a im Boden eines nicht näher dargestellten Getriebegehäuses eingedreht werden. Das Getriebe 42 wird dabei in der Höhe so auf den Extruder 20 ausgerichtet, dass seine Abtriebswellen koaxial zu den Antriebswellen der Doppelschnecke ausgerichtet sind.

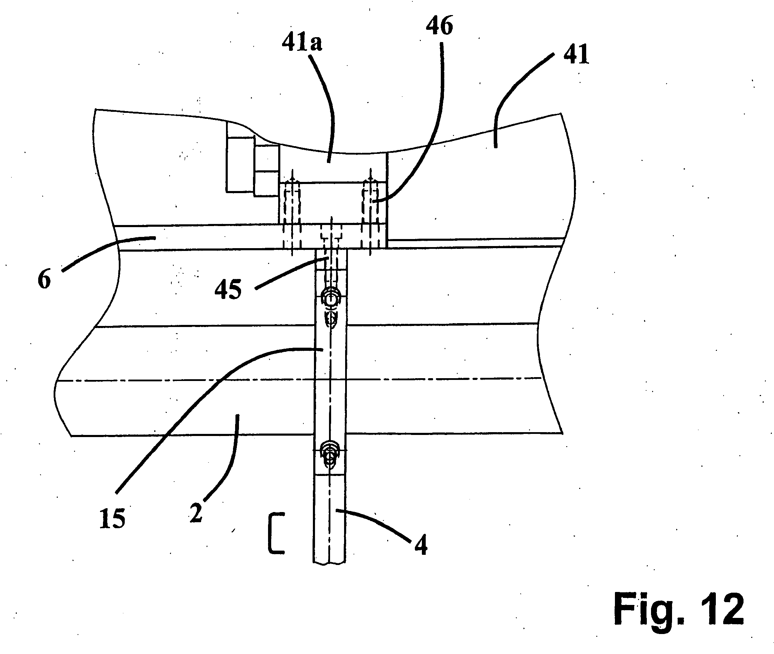

Ein in Fig. 9 und 12 hinteres Ende der Montageplatte 6 ist mittels eines Befestigungselemenis 45, z. B. einer Schraube, an der Oberseite des hinteren (rechten) zweiten Querelements 4 befestigt. Weitere Befestigungselemente 46 in Form von Schrauben od. dgl. dienen dem Zweck, in Bohrungen eingedreht zu werden, die in einem abgestuften Halsabschnitt 41a (vgl. auch Fig. 9) des Antriebsmotors 41 ausgebildet sind. Alternativ können das Getriebe 42 und der Motor 41 auch einstückig hergestellt und an der Montageplatte 6 montiert sein.

Aufgrund der beschriebenen Konstruktion des Gestells 1 kann die Extruderanlage leicht dadurch installiert werden, dass nach dem Zusammenbau des Gestells 1 zunächst der Antriebsmotor 41 und das Getriebe 42 auf der Montageplatte 6 montiert werden und dann der Extruder 20 axial an das Getriebe 22 herangezogen und durch Schrauben mit diesem verbunden wird. Nach Ausrichtung der ersten Querelemente 3 und deren Befestigung am Extruder 20 werden alle Klemmen 15 angezogen. Anschließend werden etwa vorhandene Installationsleitungen 27 angeschlossen, in die Aussparungen 26 eingelegt und mittels der Verschlusselemente 28 in diesen gesichert, worauf die Extraderanlage im wesentlichen betriebsbereit ist.

Ist es erwünscht, den Extruder 20 bzw. dessen Bearbeitungsschritte durch Hinzufügung, Demontage oder Auswechseln von Gehäuseabschnitten 43 zu verändern, braucht er nur durch Lösen der Befestigungselemente 24 von den Tragstegen 19 abgehoben, modifiziert und wieder auf den Tragstegen 19 abgelegt werden. Ist es danach erforderlich oder erwünscht, z. B. zur gleichmäßigen Gewichtsverteilung, die Querelemente 3 an anderen Stellen anzuordnen, brauchen dazu nur die Klemmen 15 gelöst, die zugehörigen Querelemente 3 parallel zur Längsachse 40 verschoben und die Klemmen 15 danach wieder festgezogen werden. Möglich wäre es bei Bedarf ferner, wie Fig. 1 und 8 zeigen, vor dem Auflegen eines modifizierten Extruders von der dort linken Gestellseite her weitere Querelemente 3 auf die Längsverbinder 2 aufzufädeln und dann auf diesen in Position zu bringen. Die Länge der Längselemente 2 wird dabei vorzugsweise so groß gewählt, dass das Gestell 1 ohne Auswechslung der Längselemente 2 den längsten vorkommenden Extruder 20 aufnehmen kann. Alternativ wäre es aber auch möglich, die Längselemente 2 an ihren Stirnseiten mit Verbindungselementen zu versehen, mittels derer die Längselemente bei Bedarf verlängert oder verkürzt werden können.

Im übrigen werden zumindest die Längs- und Querelemente 2, 3 und 4 und ggf. auch die Klemmen 15 vorzugsweise aus Aluminium und/oder Edelstahl hergestellt. Dadurch ist es möglich, auf die sonst übliche Lackierung des Extrudergestells 1 völlig zu verzichten.

Zuweilen ist es erwünscht, die Extruderanlage zusätzlich mit wenigstens einer Vorrichtung 37 zur Seiteneinspeisung zu versehen, um dem Extruder 20 quer zur Längsachse 40 irgendeinen Füllstoff wie z. B. Kreide, Glasfasern oder Talkum zuzuführen. Dies kann in Weiterbildung der Erfindung leicht dadurch erfolgen, dass diese Vorrichtung 37 an wenigstens einer Stützplatte 33 nach Fig. 7 oder entsprechend Fig. 8 zwischen zwei derartigen Stützplatten 33 montiert wird und beide Stützplatten 33 mittels eines Abstandhalters 47 und ggf. einer Tragplatte zu einer festen Baueinheit miteinander verbunden werden. Die Baueinheit wird dann dadurch am Extrudergestell 41 befestigt (Fig. 8 und 9), dass die Stützplatten 33 mit ihren entsprechend ausgebildeten und angeordneten Aussparungen 34, 35 (Fig. 7) an zugeordneten Längselementen 2 aufgehängt werden. Zu diesem Zweck werden die Aussparungen 34, 35 vorzugsweise so ausgebildet, dass die Vorrichtung 37 dadurch allein aufgrund ihrer Schwerkraft sicher im Extrudergestell 1 montiert ist. Bei Bedarf kann aber auch vorgesehen sein, die Stützplatten 33 mit den Klemmen 15 oder ähnlichen Bauteilen an den Längselementen 2 zusätzlich zu befestigen.

Wie Fig. 9 zeigt, können längs des Extruders 20 mehrere derartige Vorrichtungen 37, 37a angeordnet werden. Dabei bietet das erfindungsgemäße Gestell 2 den zusätzlichen Vorteil, dass die kompletten, aus den Stützplatten 33, der Vorrichtung 37 und den Abstandhaltern 47 bestehenden Baueinheiten nach dem Lösen etwaiger Klemmen, Befestigungsschrauben od. dgl. ohne Demontage parallel zur Längsachse 40 auf den Längselementen 2 verschoben werden können, um sie auf die im Einzelfall gewünschten Gehäuseabschnitte 43 auszurichten. Beispielsweise kann die Vorrichtung 37 dorthin verschoben werden, wo in Fig. 9 die Vorrichtung 37a eingeordnet ist, bzw. umgekehrt. Die Umrüstung einer einmal installierten Extruderanlage auf die Bearbeitung unterschiedlicher Rohstoffe mit unterschiedlichen Bearbeitungsschritten kann daher auch beim Vorhandensein wenigstens einer Vorrichtung 37 zur Seiteneinspeisung mit wenigen Handgriffen erfolgen.

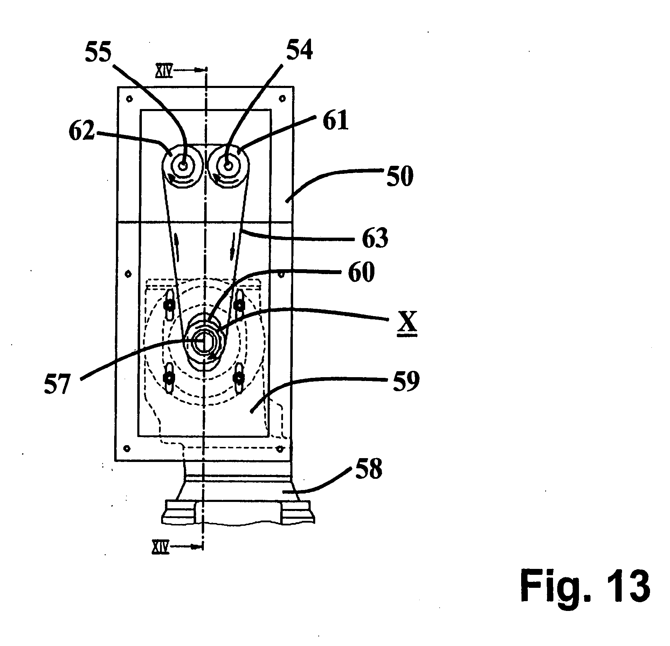

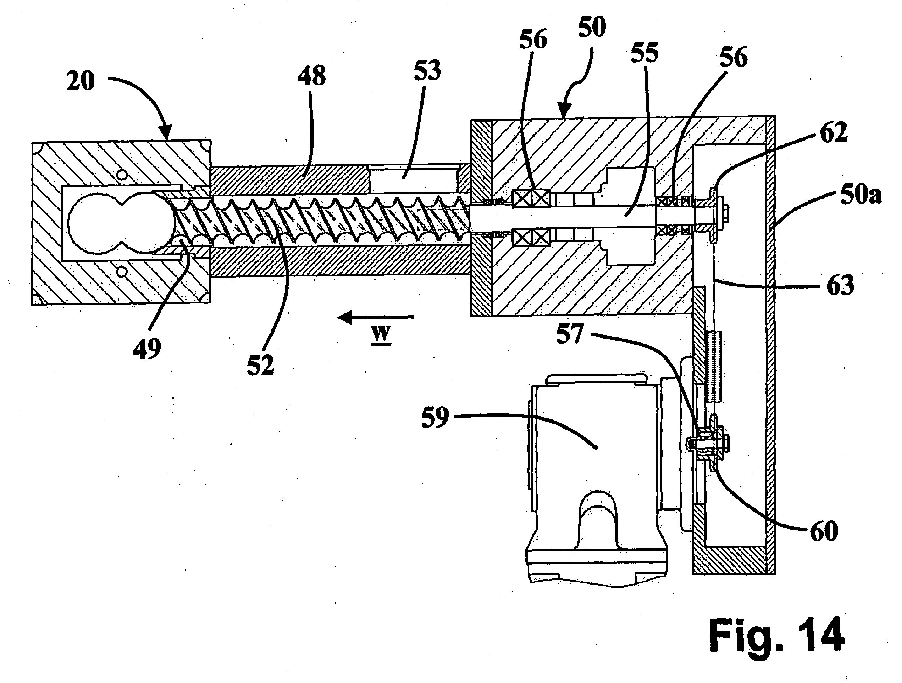

Eine für die Zwecke der Erfindung besonders gut geeignete, konstruktiv einfache und vergleichsweise leichte Vorrichtung 37 ist schematisch in Fig. 13 und 14 dargestellt.

Die Vorrichtung 37 enthält danach ein Förderschneckengehäuse 48 (Fig. 8 und 14), das an eine seitliche Zuführungsöffnung 49 (Fig. 14) des Extruders 20 angeschlossen wird, und ein Getriebegehäuse 50, das einen zur Außenseite hin abnehmbaren, nur in Fig. 8 und 14 dargestellten Deckel 50a aufweist. Außerdem ist die gesamte Vorrichtung 37 zweckmäßig mit Hilfe von Führungselementen 51 (Fig. 9) senkrecht zur Längsachse 40 verschiebbar auf den als Tragschienen od. dgl. ausgebildeten Halterungsmitteln 36 (Fig. 7) der Stützplatten 33 montiert, damit sie bei Bedarf in Richtung der Zuführungsöffnung 49 vor- und zurückbewegt werden kann.

In dem Förderschneckengehäuse 48 sind zwei Förderschnecken 52 drehbar gelagert, von denen in Fig. 14 nur eine sichtbar ist und die den über eine Einfüllöffnung 53 (Fig. 14) zugeführten Füllstoff in Richtung eines Pfeils w zum Extruder 20 fördern. Die Förderschnecken 52 können ein- oder mehrteilig ausgebildet sein und z. B. aus je einer Welle und einer auf diese aufgeschobenen Schnecke bestehen. Für die vorliegende Beschreibung werden dagegen der Einfachheit halber einstückige Förderschnecken 52 vorausgesetzt. Die Förderschnecken 52 sind koaxial mit je einer Abtriebswelle 54, 55 (Fig. 13) des Förderschneckengetriebes verbunden, wobei in Fig. 14 nur die Abtriebswelle 55 sichtbar ist. Die Abtriebswellen 54, 55 sind im Getriebegehäuse 51 mittels Lagern 56 drehbar gelagert und im eingebauten Zustand mit ihren Achsen zweckmäßig horizontal und senkrecht zur Längsachse 40 (Fig. 8) angeordnet.

Nach einem besonders bevorzugten Merkmal der Erfindung enthält das zum Antrieb der Förderschnecken 52 bestimmte Förderschneckengetriebe der Vorrichtung 37 einen der Leistungsverzweigung dienenden Zahnriemen- und/oder Kettentrieb, wie nachfolgend am Beispiel eines Zahnriementriebs näher erläutert ist. Zu diesem Zweck ist in einem unteren Bereich des Getriebegehäuses 50 eine Antriebswelle 57 des Förderschneckengetriebes drehbar gelagert, die zweckmäßig parallel zu den Förderschnecken 52 und Abtriebswellen 54, 55 angeordnet ist und von irgendeiner an den Stützplatten 33 montierten Antriebseinheit angetrieben wird. Diese besteht z. B. aus einem Antriebsmotor 58 und einem Zwischengetriebe 59 herkömmlicher Bauart.

In dem Getriebegehäuse 50 sind insbesondere die den Zahnriementrieb bildenden Getriebeteile untergebracht, die eine Leistungsvenweigung von der Antriebswelle 57 auf die Abtriebswellen 54, 55 vornehmen, um diese und damit auch die beiden mit ihnen verbundenen Förderschnecken 52 mit vom Anwendungszweck abhängigen Drehzahlen und Drehmomenten anzutreiben. Diese Getriebeteile enthalten eine auf der Antriebswelle 57 befestige Zahnriemenscheibe 60 sowie zwei weitere Zahnriemenscheiben 61, 62, die an je einem vom Extruder 20 entfernten Ende einer der Abtriebswellen 54 und 55 befestigt sind. Schließlich ist ein Getriebeteil in Form eines mit der Innenverzahnung versehenen, endlosen Zahnriemens 63 vorhanden, der ohne Umlenkung zumindest teilweise um die Zahnriemenscheiben 60, 61 und 62 gelegt ist. Wird daher die Antriebswelle 57 des Förderschneckengetriebes bzw. deren Zahnriemenscheibe 60 in Richtung eines Pfeils x (Fig. 13) gedreht, dann werden die beiden Zahnriemenscheiben 61 und 62, die sie tragenden beiden Abtriebswellen 54, 55 und die beiden mit diesen verbundenen Förderschnecken 52 in derselben Drehrichtung und damit gleichsinnig angetrieben, wie es bei Vorrichtungen zur Seiteneinspeisung allgemein erwünscht und in Fig. 13 durch zusätzliche Pfeile angedeutet ist.

Dadurch, dass das Förderschneckengetriebe entsprechend Fig. 13 und 14 außer den An- und Abtriebswellen 57, 54 und 55 nur den beschriebenen, aus den Zahnriemenscheiben 60 bis 62 und den Zahnriemen 63 gebildeten Zahnriementrieb enthält, wird einerseits eine sehr einfache und kostengünstige Getriebeanordnung ohne Zahnräder od. dgl. erhalten. Andererseits ist es bei Bedarf auf einfache Weise möglich, das Übersetzungsverhältnis zu verändern, indem bei abgenommenem Deckel 50a die Zahnriemenscheiben 60 bis 62 ausgewechselt werden. Zum etwa erforderlichen Spannen bzw. Entspannen des Zahnriemens 63 könnte eine weitere, schwenkbar angeordnete Zahnriemenscheibe vorgesehen sein. Im Ausführungsbeispiel wird die Antriebseinheit 58, 59 zu diesem Zweck mittels der aus Fig. 13 ersichtlichen Langlöcher und Befestigungsschrauben relativ zum Getriebegehäuse 50 nach oben oder unten bewegt.

Der Zahnriementrieb erhöht die Laufruhe der gesamten Anordnung. Vorteilhaft ist auch, dass das Förderschneckengetriebe insgesamt trocken, d. h. ohne jede Schmierung laufen kann, was das Austauschen der Zahnriemenscheiben 60 bis 62 erheblich erleichtert. Ähnliche Vorteile ergeben sich, wenn der Zahnriementrieb erfindungsgemäß durch einen Kettentrieb ersetzt wird, d. h. die Zahnriemenscheiben 60 bis 62 als Kettenräder und die Zahnriemen 63 als Ketten ausgebildet werden.

Dieselben Vorteile und Möglichkeiten können auch mit einer anderen Gestaltung des Förderschneckengetriebes erhalten werden, indem z. B. auf der Antriebswelle 57 zwei in deren Achsrichtung hintereinander angeordnete Zahnriemenscheiben befestigt werden. In diesem Fall sind die beiden Zahnriemenscheiben 61 und 62 in Richtung ihrer Achsen mit einem entsprechenden Abstand zueinander versetzt und zwei endlose Zahnriemen mit Innenverzahnung vorgesehen, die beide ohne Umlenkung zumindest teilweise um je eine Zahnriemenscheibe der Antriebswelle 57 und eine Zahnriemen scheibe einer zugeordneten Abtriebswelle gelegt sind. Die mit einem solchen Förderschneckengetriebe erzielbaren Vorteile sind analog zu denen, die anhand der Fig. 13 und 14 beschrieben wurden, mit Ausnahme der Anwendung von zwei Zahnriemen anstatt nur eines Zahnriemens. Wie in Fig. 13 und 14 werden auch hier die beiden Förderschnecken 52 vorzugsweise gleichsinnig angetrieben.

Das erfindungsgemäße Gestell 1 bringt zahlreiche Vorteile mit sich. Neben der beschriebenen Flexibilität bei der Umrüstung auf einen anderen Extrudertyp oder eine andere Extruderlänge besteht ein wichtiger Vorteil darin, dass es keine diese Flexibilität beschränkenden Schweißverbindungen od. dgl. aufweist. Die Gehäuseabschnitte 43 und die Antriebseinheit 41, 42 werden vielmehr mit wenigen Schrauben od. dgl. direkt auf den Querelementen 3, 4 befestigt, sobald diese die gewünschten Positionen längs der Längselemente 2 einnehmen. Die benötigten Installationsleitungen 27 können mittels der Aussparungen 26 auf einfache Weise verlegt werden. Eine Vielzahl der für diese Maßnahmen erforderlichen Elemente sind bereits bei der Herstellung in die Querelemente 3, 4 und Stützplatten 33 integriert, so dass keine zusätzlichen Montagehalterungen bzw. -elemente, Kabelkanäle od. dgl. hergestellt und am Gestell angebracht werden müssen. Außerdem ermöglicht es das erfindungsmäße Extrudergestell, den Extruder 20 nur an wenigen Stellen und ggf. mit Hilfe von in Längsrichtung erstreckten Langlöchern und vergleichsweise lose in diese eingedrehten Schrauben so zu lagern, dass seine beim Erhitzen parallel zur Längsachse 40 auftretende Längenänderung nicht behindert wird. Außerdem kann vorgesehen sein, die Stützplatten 33 axial so lose auf den zugehörigen Längselementen 2 anzuordnen, dass sie geringfügige Verschiebungen des Extruders 20 aufgrund dessen Wärmeausdehnung ohne weiteres mitmachen können.

Die Erfindung nicht auf das beschriebene Ausführungsbeispiel beschränkt, das auf vielfache Weise abgewandelt werden kann. Das gilt insbesondere für die Ausbildung und/oder die Zahl der pro Gestell 1 vorgesehenen Längs- und Querelemente 2, 3 und 4. Prinzipiell würde es ausreichen, ein einziges Längselement 2 vorzusehen, das beispielsweise einen quadratischen oder rechteckigen Querschnitt besitzt, und die Querelemente 3, 4 z. B. mit mittleren, rundum geschlossenen Aussparungen zu versehen, die entsprechende quadratische oder rechteckige Innenkonturen aufweisen, so dass sie parallel zur Längsachse 40 auf die Längselemente 2 aufgeschoben werden können und dann undrehbar, jedoch axial verschiebbar, auf diesen angeordnet sind. Auch die Ausgestaltung des Tragstegs 19 und der Montageplatte 6 sowie deren Befestigung ist nur als bevorzugtes, aber nicht beschränkendes Ausführungsbeispiel aufzufassen.

Weiterhin kann die Erfindung, ggf. in entsprechender Abänderung und/oder Ergänzung, auch bei anderen als Doppelschnecken-Extrudem 20 od. dgl. und mit Vorrichtungen 37 angewendet werden, die nur eine oder mehr als zwei Förderschnecken aufweisen, falls sich dies aus irgendeinem Grund als zweckmäßig erweisen sollte. In diesem Fall wäre der Zahnriemen- bzw. Kettentrieb in entsprechender Weise zu ergänzen. Außerdem könnte bei Bedarf vorgesehen werden, die Förderschnecken gegenläufig statt, wie gezeigt und beschrieben, gleichsinnig anzutreiben. In diesem Zusammenhang wäre es auch denkbar, die Antriebswelle 57 entfallen zu lassen, den Antriebsmotor 58 zum direkten Antrieb einer der beiden Abtriebswellen 54, 55 vorzusehen und die andere Abtriebswelle zur Leistungsverzweigung über einen Riemen- oder Kettentrieb mit der direkt getriebenen Abtriebswelle zu koppeln. Ferner ist klar, dass die vorliegende Erfindung auch einen zur Herstellung von Extrudergestellen geeigneten Bausatz umfasst, der wenigstens ein Längselement 2, je zwei Querelemente 3 und 4 und ggf. zwei oder mehr Stützplatten 33 umfasst.

## Patentansprüche

1. Extrudergestell für einen Extruder (20) mit einer Mehrzahl von in Richtung einer Längsachse (40) hintereinander angeordneten Gehäuseabschnitten, enthaltend wenigstens ein parallel zur Längsachse (40) erstrecktes Längselement (2) und wenigstens zwei quer zur Längsachse (40) angeordnete, Halterungen (19) für den Extruder (20) aufweisende, erste Querelemente (3), **dadurch gekennzeichnet, daß** die ersten Querelemente Aussparungen (14) aufweisen, die das Längselement (2) zumindest teilweise umgreifen und mittels derer die Querelemente (3) zwecks Anpassung der Länge des Extrudergestells an die Extruderlänge in Richtung der Längsachse (40) relativ zueinander verschiebbar am Längselement (2) montiert sind, und daß Verbindungsmittel (15) zur festen, jedoch lösbaren Verbindung der Querelemente (3) mit dem Längselement (2) vorgesehen sind.

2. Extrudergestell nach Anspruch 1, **dadurch gekennzeichnet, dass** es wenigstens zwei zweite Querelemente (4) mit entsprechenden Aussparungen (14) und Mitteln (15) sowie eine auf diesen befestigbare Montageplatte (6) aufweist.

3. Extrudergestell nach Anspruch 1 oder 2, **dadurch gekennzeichnet, dass** das Längselement (2) stangen- oder rohrförmig ausgebildet ist.

4. Extrudergestell nach einem der Ansprüche 1 bis 3, **dadurch gekennzeichnet, dass** die Querelemente (3, 4) plattenförmig ausgebildet sind.

5. Extrudergestell nach einem der Ansprüche 1 bis 4, **dadurch gekennzeichnet, dass** die Aussparungen (14) aus randoffenen, entsprechend der Querschnittsform des Längselements (2) ausgebildeten Ausschnitten bestehen.

6. Extrudergestell nach Anspruch 5, **dadurch gekennzeichnet, daß** die Mittel (15) aus Klemmen mit entsprechend der Querschnittsform des Längselements (2) ausgebildeten Klemmbacken (16) und Schrauben (17) zur Befestigung der Klemmen an den Querelementen (3, 4) bestehen.

7. Extrudergestell nach einem der Ansprüche 1 bis 6, **dadurch gekennzeichnet, dass** die Halterungen (19) an Oberseiten der ersten Querelemente (3) vorgesehene Tragstege aufweisen.

8. Extrudergestell nach Anspruch 7, **dadurch gekennzeichent, dass** die Tragstege unter Bildung von Freiräumen (23) für Befestigungselemente (24) an den ersten Querelementen (3) vorgesehen sind.

9. Extrudergestell nach einem der Ansprüche 1 bis 8, **dadurch gekennzeichnet, dass** zumindest die ersten Querelemente (3) mit zur Aufnahme von Installationsleitungen (27) bestimmten Aussparungen (26) versehen sind.

10. Extrudergestell nach Anspruch 9, **dadurch gekennzeichnet, dass** den Aussparungen (26) mittels Schrauben (29) an den Querelementen (3) befestigbare Verschlußelemente (28) zugeordnet sind.

11. Extrudergestell nach einem der Ansprüche 1 bis 10, **dadurch gekennzeichnet, dass** die Querelemente (3, 4) mit Stellfüßen (8) versehen sind.

12. Extrudergestell nach einem der Ansprüche 4 bis 11, **dadurch gekennzeichnet, dass** es wenigstens zwei Längselemente (2) enthält und die Querelemente (3, 4) je zwei Seitenränder mit wenigstens je einer randoffenen Aussparung (14) aufweisen.

13. Extrudergestell nach einem der Ansprüche 4 bis 11, **dadurch gekennzeichnet, dass** es vier Längselemente (2) enthält und die Querelemente (3, 4) je zwei Seitenränder mit je zwei randoffenen Aussparungen (14) aufweisen.

14. Extrudergestell nach einem der Ansprüche 1 bis 13, **dadurch gekennzeichnet, dass** ihm wenigstens eine zur seitlichen Montage an wenigstens einem Längselement (2) bestimmte Stützplatte (33) zugeordnet ist, die Mittel zur Halterung einer Vorrichtung (37) zur Seiteneinspeisung von Füllstoffen aufweist.

15. Extrudergestell nach Anspruch 14, **dadurch gekennzeichnet, dass** die Vorrichtung (37) zur Seiteneinspeisung zusammen mit der Stützplatte (33) parallel zur Längsachse (40) verschiebbar an dem wenigstens einen Längselement (2) montiert ist.

16. Extrudergestell nach Anspruch 15, **dadurch gekennzeichnet, dass** wenigstens zwei, durch wenigstens einen Abstandhalter (47) zu einer Baueinheit miteinander verbundene Stützplatten (33) vorgesehen sind.

17. Extrudergestell nach einem der Ansprüche 14 bis 16, **dadurch gekennzeichnet, dass** die Vorrichtung (37) eine Fördereinheit mit wenigstens zwei parallelen Förderschnekken (52), eine Antriebseinheit (58, 59) und ein zwischen der Antriebseinheit (58, 59) und den Förderschnecken (52) angeordnetes Förderschneckengetriebe enthält.

18. Extrudergestell nach Anspruch 17, **dadurch gekennzeichnet, dass** die Vorrichtung (37) seitlich angebrachte Führungselemente (51) aufweist und mit diesen auf an den Stützplatten (33) vorgesehenen Tragschienen verschiebbar abgestützt ist.

19. Extrudergestell nach einem der Ansprüche 1 bis 18, **dadurch gekennzeichnet, dass** zumindest die Längs- und Querelemente (2, 3, 4) aus Aluminium und/oder Edelstahl hergestellt sind.

20. Extrudergestell nach einem der Ansprüche 1 bis 19, **dadurch gekennzeichnet, dass** die Längselemente (2) eine dem längsten aufzunehmenden Extruder (20) entsprechende Länge aufweisen.

21. Bausatz zur Herstellung eines Extrudergestells nach einem des Ansprüche 1-20, **dadurch gekennzeichnet, daß** er wenigstens ein parallel zu einer Längsachse erstrecktes Längselement (2), wenigstens zwei quer zur Längsachse (40) anzuordnende, mit Halterungen (19) für den Extruder (20) versehene, erste Querelemente (3), die das Längselement (2) zumindest teilweise umgreifende Aussparungen (14) aufweisen und mit diesen zwecks Anpassung der Länge des Extrudergestells an die Extruderlänge in Richtung der Längsachse (40) verschiebbar am Längselement (2) montierbar sind, und Verbindungsmittel (15) zur festen, jedoch lösbaren Verbindung der Querelemente (3) mit dem Längselement (2) enthält.

22. Bausatz nach Anspruch 21, **dadurch gekennzeichnet, dass** er wenigstens eine zur seitlichen Montage an wenigstens einem Längselement (2) bestimmte Stützplatte (33) enthält, die Mittel zur Halterung einer Vorrichtung (37) zur Seiteneinspeisung von-Füllstoffen aufweist.

## Claims

1. Extruder frame for an extruder (20) having a multiplicity of housing sections arranged in series in the direction of a longitudinal axis (40), comprising at least one longitudinal element (2) which extends parallel to the longitudinal axis (40) and comprising at least two first transverse elements (3) which are arranged perpendicular to the longitudinal axis (40) and which have brackets (19) for the extruder (20), **characterized in that** the first transverse elements have recesses (14) which engage at least partially around the longitudinal element (2) and by means of which the transverse elements (3) are mounted on the longitudinal element (2) so as to be movable relative to one another in the direction of the longitudinal axis (40) for the purpose of adapting the length of the extruder frame to the extruder length, and **in that** connecting means (15) are provided for fixedly but releasably connecting the transverse elements (3) to the longitudinal element (2).

2. Extruder frame according to Claim 1, **characterized in that** it has at least two second transverse elements (4) with corresponding recesses (14) and means (15), and also a mounting plate (6) that can be fastened thereon.

3. Extruder frame according to Claim 1 or 2, **characterized in that** the longitudinal element (2) is of rod-shaped or tubular design.

4. Extruder frame according to one of Claims 1 to 3, **characterized in that** the transverse elements (3, 4) are of plate-shaped design.

5. Extruder frame according to one of Claims 1 to 4, **characterized in that** the recesses (14) are composed of cutouts which are open at the edge and which are designed correspondingly to the cross-sectional shape of the longitudinal element (2).

6. Extruder frame according to Claim 5, **characterized in that** the means (15) are composed of clamps with clamping jaws (16) designed correspondingly to the cross-sectional shape of the longitudinal element (2) and with screws (17) for fastening the clamps to the transverse elements (3, 4).

7. Extruder frame according to one of Claims 1 to 6, **characterized in that** the brackets (19) have bearing webs provided on top sides of the first transverse elements (3).

8. Extruder frame according to Claim 7, **characterized in that** the bearing webs are provided on the first transverse elements (3) so as to form free spaces (23) for fastening elements (24).

9. Extruder frame according to one of Claims 1 to 8, **characterized in that** at least the first transverse elements (3) are provided with recesses (26) designed for receiving installation lines (27).

10. Extruder frame according to Claim 9, **characterized in that** the recesses (26) are assigned closure elements (27) which can be fastened to the transverse elements (3) by means of screws (29).

11. Extruder frame according to one of Claims 1 to 10, **characterized in that** the transverse elements (3, 4) are provided with adjustable feet (8).

12. Extruder frame according to one of Claims 4 to 11, **characterized in that** it comprises at least two longitudinal elements (2), and the transverse elements (3, 4) have in each case two side edges with at least in each case one recess (14) which is open at the edge.

13. Extruder frame according to one of Claims 4 to 11, **characterized in that** it comprises four longitudinal elements (2), and the transverse elements (3, 4) have in each case two side edges with in each case two recesses (14) which are open at the edge.

14. Extruder frame according to one of Claims 1 to 13, **characterized in that** it is assigned at least one support plate (33) designed for mounting laterally on at least one longitudinal element (2), which support plate (33) has means for the retention of a device (37) for a lateral infeed of filling materials.

15. Extruder frame according to Claim 14, **characterized in that** the device (37) for lateral infeed is mounted, together with the support plate (33), on the at least one longitudinal element (2) so as to be movable parallel to the longitudinal axis (40).

16. Extruder frame according to Claim 15, **characterized in that** at least two support plates (33) are provided which are connected to one another, so as to form a structural unit, by means of at least one spacer (47).

17. Extruder frame according to one of Claims 14 to 16, **characterized in that** the device (37) comprises a conveying unit with at least two parallel worm conveyors (52), comprises a drive unit (58, 59), and comprises a worm conveyor gearing arranged between the drive unit (58, 59) and the worm conveyors (52).

18. Extruder frame according to Claim 17, **characterized in that** the device (37) has laterally attached guide elements (51) and, by means thereof, is movably supported on bearing rails provided on the support plates (33).

19. Extruder frame according to one of Claims 1 to 18, **characterized in that** at least the longitudinal and transverse elements (2, 3, 4) are produced from aluminium and/or high-grade steel.

20. Extruder frame according to one of Claims 1 to 19, **characterized in that** the longitudinal elements (2) have a length corresponding to the longest extruder (20) to be held.

21. Construction set for producing an extruder frame according to one of Claims 1 to 20, **characterized in that** said construction set comprises at least one longitudinal element (2) which extends parallel to a longitudinal axis, at least two first transverse elements (3) for arranging perpendicular to the longitudinal axis (40), which first transverse elements are provided with brackets (19) for the extruder (20) and which first transverse elements have recesses (14) which engage at least partially around the longitudinal element (2) and which first transverse elements, by means of said recesses, can be mounted on the longitudinal element (2) so as to be movable in the direction of the longitudinal axis (40) for the purpose of adapting the length of the extruder frame to the extruder length, and connecting means (15) for fixedly but releasably connecting the transverse elements (3) to the longitudinal element (2).

22. Construction set according to Claim 21, **characterized in that** it comprises at least one support plate (33) which is designed for being mounted laterally on at least one longitudinal element (2) and which has means for the retention of a device (37) for a lateral infeed of filling materials.

## Revendications

1. Support d'extrudeuse pour une extrudeuse (20) avec une pluralité de sections de boîtier disposées les unes derrière les autres en direction d'un axe longitudinal (40), contenant au moins un élément longitudinal (2) étendu parallèlement à l'axe longitudinal (40) et au moins deux premiers éléments transversaux (3) présentant des fixations (19) pour l'extrudeuse (20), disposés transversalement à l'axe longitudinal (40), **caractérisé en ce que** les premiers éléments transversaux présentent des évidements (14) qui entourent au moins en partie l'élément longitudinal (2) et à l'aide desquels les éléments transversaux (3) sont montés de manière mobile en direction de l'axe longitudinal (40) les uns par rapport aux autres sur l'élément longitudinal (2) en vue de l'adaptation de la longueur du support d'extrudeuse à la longueur d'extrudeuse, et **en ce que** des moyens de liaison (15) sont prévus pour la liaison fixe, toutefois détachable des éléments transversaux (3) avec l'élément longitudinal (2).

2. Support d'extrudeuse selon la revendication 1, **caractérisé en ce qu'**il présente au moins deux deuxièmes éléments transversaux (4) avec des évidements (14) et moyens (15) correspondants ainsi qu'une plaque de montage (6) pouvant être fixée dessus.

3. Support d'extrudeuse selon la revendication 1 ou 2, **caractérisé en ce que** l'élément longitudinal (2) est réalisé en forme de tige ou de tube.

4. Support d'extrudeuse selon l'une quelconque des revendications 1 à 3, **caractérisé en ce que** les éléments transversaux (3, 4) sont réalisés en forme de plaque.

5. Support d'extrudeuse selon l'une quelconque des revendications 1 à 4, **caractérisé en ce que** les évidements (14) se composent de sections à bord ouvert, réalisées selon la forme de section transversale de l'élément longitudinal (2).

6. Support d'extrudeuse selon la revendication 5, **caractérisé en ce que** les moyens (15) se composent de pinces avec des mâchoires de serrage (16) réalisées selon la forme de section transversale de l'élément longitudinal (2) et des vis (17) pour la fixation des pinces sur les éléments transversaux (3, 4).

7. Support d'extrudeuse selon l'une quelconque des revendications 1 à 6, **caractérisé en ce que** les fixations (19) présentent des nervures porteuses prévues sur des côtés supérieurs des premiers éléments transversaux (3).

8. Support d'extrudeuse selon la revendication 7, **caractérisé en ce que** les nervures porteuses sont prévues en formant des espaces libres (23) pour des éléments de fixation (24) sur les premiers éléments transversaux (3).

9. Support d'extrudeuse selon l'une quelconque des revendications 1 à 8, **caractérisé en ce qu'**au moins les premiers éléments transversaux (3) sont pourvus d'évidements (26) déterminés pour la réception de conduites d'installation (27).

10. Support d'extrudeuse selon la revendication 9, **caractérisé en ce que** des éléments de fermeture (28) pouvant être fixés à l'aide de vis (29) sur les éléments transversaux (3) sont associés aux évidements (26).

11. Support d'extrudeuse selon l'une quelconque des revendications 1 à 10, **caractérisé en ce que** les éléments transversaux (3, 4) sont pourvus de pieds de réglage (8).

12. Support d'extrudeuse selon l'une quelconque des revendications 4 à 11, **caractérisé en ce qu'**il contient au moins deux éléments longitudinaux (2) et les éléments transversaux (3, 4) présentent chacun deux bords latéraux avec chacun au moins un évidement à bord ouvert (14).

13. Support d'extrudeuse selon l'une quelconque des revendications 4 à 11, **caractérisé en ce qu'**il contient quatre éléments longitudinaux (2) et les éléments transversaux (3, 4) présentent chacun deux bords latéraux avec chacun deux évidements (14) à bord ouvert.

14. Support d'extrudeuse selon l'une quelconque des revendications 1 à 13, **caractérisé en ce qu'**au moins une plaque d'appui (33) déterminée pour le montage latéral sur au moins un élément longitudinal (2) lui est associée, laquelle présente des moyens destinés à la fixation d'un dispositif (37) pour l'alimentation latérale de substances de remplissage.

15. Support d'extrudeuse selon la revendication 14, **caractérisé en ce que** le dispositif (37) pour l'alimentation latérale est monté de manière mobile sur au moins un élément longitudinal (2) conjointement avec la plaque d'appui (33) parallèlement à l'axe longitudinal (40).

16. Support d'extrudeuse selon la revendication 15, **caractérisé en ce qu'**au moins deux plaques d'appui (33) reliées l'une à l'autre par au moins un élément d'écartement (47) pour former une unité de construction sont prévues.

17. Support d'extrudeuse selon l'une quelconque des revendications 14 à 16, **caractérisé en ce que** le dispositif (37) contient une unité de transport avec au moins deux vis sans fin (52) parallèles, une unité d'entraînement (58, 59) et un engrenage de vis sans fin disposé entre l'unité d'entraînement (58, 59) et les vis sans fin (52).

18. Support d'extrudeuse selon la revendication 17, **caractérisé en ce que** le dispositif (37) présente des éléments de guidage (51) montés latéralement et est en appui de manière mobile avec ceux-ci sur des rails porteurs prévus sur les plaques d'appui (33).

19. Support d'extrudeuse selon l'une quelconque des revendications 1 à 18, **caractérisé en ce qu'**au moins les éléments longitudinaux et transversaux (2, 3, 4) sont fabriqués en aluminium et/ou en acier spécial.

20. Support d'extrudeuse selon l'une quelconque des revendications 1 à 19, **caractérisé en ce que** les éléments longitudinaux (2) présentent une longueur correspondant à l'extrudeuse (20) la plus longue à recevoir.

21. Kit pour la fabrication d'un support d'extrudeuse selon l'une quelconque des revendications 1 à 20, **caractérisé en ce qu'**il contient au moins un élément longitudinal (2) étendu parallèlement à un axe longitudinal, au moins deux premiers éléments transversaux (3) pourvus de fixations (19) pour l'extrudeuse (20), à disposer transversalement à l'axe longitudinal (40), qui présentent des évidements (14) entourant au moins en partie l'élément longitudinal (2) et peuvent être montés avec ceux-ci de manière mobile en direction de l'axe longitudinal (40) sur l'élément longitudinal (2) en vue de l'adaptation de la longueur du support d'extrudeuse à la longueur d'extrudeuse, et des moyens de liaison (15) pour la liaison fixe, toutefois détachable des éléments transversaux (3) avec l'élément longitudinal (2).

22. Kit selon la revendication 21, **caractérisé en ce qu'**il contient au moins une plaque d'appui (33) déterminée pour le montage latéral sur au moins un élément longitudinal (2), laquelle plaque présente des moyens destinés à la fixation d'un dispositif (37) pour l'alimentation latérale de substances de remplissage.
